# EUROPEAN PATENT SPECIFICATION

(11) **EP 3 971 830 B1**
(45) Date of publication and mention of the grant of the patent: **20.09.2023**
(21) Application number: 21771562.2
(22) Date of filing: 18.01.2021
(51) Int. Cl.: G06T 7/11, G06T 7/149, G06T 7/00, G06N 3/08, G06N 3/045

(54) **PNEUMONIA SIGN SEGMENTATION METHOD AND APPARATUS, MEDIUM AND ELECTRONIC DEVICE**
VERFAHREN UND EINRICHTUNG ZUR SEGMENTIERUNG VON PNEUMONIEANZEICHEN, MEDIUM UND ELEKTRONISCHE VORRICHTUNG
PROCÉDÉ ET APPAREIL DE SEGMENTATION DE SIGNE DE PNEUMONIE, SUPPORT ET DISPOSITIF ÉLECTRONIQUE

(30) Priority: 17.03.2020 CN 202010189089
(43) Date of publication of application: 23.03.2022
(73) Proprietor: Infervision Medical Technology Co., Ltd., Haidian District Beijing 100085 (CN)
(72) Inventor: WANG, Yu, Beijing 100085 (CN); WANG, Shaokang, Beijing 100085 (CN); CHEN, Kuan, Beijing 100085 (CN)
(74) Representative: Murgitroyd & Company
(86) International application number: PCT/CN2021/072515
(87) International publication number: WO 2021/184949

(56) References cited:
- CN-A- 110 503 640
- CN-A- 110 706 200
- CN-A- 111 415 356
- CN-A- 111 415 743
- US-A1- 2006 018 524
- US-A1- 2014 074 493
- US-A1- 2018 293 465
- US-A1- 2019 080 456
- AHMAD Z ET AL: "A comparison of different methods for combining multiple neural networks models", PROCEEDINGS OF THE 2002 INTERNATIONAL JOINT CONFERENCE ON NEURAL NETWORKS. IJCNN'02. HONOLULU, HAWAII, MAY 12 - 17, 2002; [INTERNATIONAL JOINT CONFERENCE ON NEURAL NETWORKS], NEW YORK, NY : IEEE, US, vol. 1, 12 May 2002 (2002-05-12), pages 828-833, XP010590964, DOI: 10.1109/IJCNN.2002.1005581 ISBN: 978-0-7803-7278-8
- HEITMANN K. R. ET AL: "Automatic detection of ground glass opacities on lung HRCT using multiple neural networks", EUROPEAN RADIOLOGY, vol. 7, no. 9, November 1997 (1997-11), pages 1463-1472, XP055948104, Berlin/Heidelberg ISSN: 0938-7994, DOI: 10.1007/s003300050318
- Deng Ling-bo , Zhou Wen , Zeng Qiao-ling , Yuan Zhi-dong , Cheng Guan-xun: "Clinical and Chest CT Features of Suspected and Confirmed NovelCoronary Pneumonia", Medical Information, vol. 33, no. 4, 15 February 2020 (2020-02-15), pages 4-7, XP055852127, CN ISSN: 1006-1959, DOI: 10.3969/j.issn.1006-1959.2020.04.002

## Description

### TECHNICAL FIELD

This application relates to the field of image processing, and in particular to a segmentation method and apparatus for a pneumonia sign in a CT image, a computer-readable storage medium, and an electronic device.

### BACKGROUND

Computed Tomography (CT) is an imaging technology whereby three-dimensional radioactive-ray medical images are reconstructed through digital geometric processing. In this technology, X-rays in a single axial plane rotationally irradiate a human body. Since different tissues have different absorption capacities (or radiodensities) for X-rays, tomographic images can be reconstructed by using a computer three-dimensional technology. After window-width and window-level processing, tomographic images of a corresponding tissue can be obtained. These images are superposed layer upon layer, to form a stereoscopic image.

Whether a person is infected with pneumonia can be determined by using a CT image. CT image detection is one of the most important and accurate detection methods, especially for detection of pneumonia caused by novel coronavirus. Currently, after a CT image is obtained, in most cases, a lung region is first segmented, a pneumonia lesion or sign is then segmented manually, and whether pneumonia is caused and the degree of pneumonia are finally determined based on the pneumonia lesion or sign. Such a segmentation method is obviously inefficient, especially for detection of viral pneumonia caused by novel coronavirus, because novel coronavirus is highly infectious, and a large number of suspected people need to be quickly screened. In this case, not only accuracy needs to be ensured, efficiency also needs to be improved, to contain the spread of a virus as soon as possible. Therefore, currently there is an urgent need for a high-precision and high-efficiency segmentation method for a lung lesion or sign.

US 2006/018524 A1 discloses a system for classifying a target structure in an image into abnormality types. The system has a scanning mechanism that scans a local window across sub-regions of the target structure by moving the local window across the image to obtain sub-region pixel sets. A mechanism inputs the sub-region pixel sets into a classifier to provide output pixel values based on the sub-region pixel sets, each output pixel value representing a likelihood that respective image pixels have a predetermined abnormality, the output pixel values collectively determining a likelihood distribution output image map. A mechanism scores the likelihood distribution map to classify the target structure into abnormality types.

US 2019/080456 A1 discloses an image segmentation method, the method first provides an original image as an input into a preliminary fully convolutional neural network, which is configured to predict a region where an object in the original image may be located, and an output thereof includes a predicted probability image. The original image will be segmented into smaller sub-images 1-n (i.e., sub-images representing the object potential regions) as an input image of the refinement fully convolutional neural network, in order to calculate the precisely segmented sub-probability images 1-n through the network. The calculated sub-probability images 1-n will be combined to generate a final probability image.

Ahmad et al. ("A comparison of different methods for combining multiple neural networks models", Proceedings of the 2002 International Joint Conference on Neural Networks) discloses a comparison of different methods for combining multiple neural networks models. A single neural network model developed from a limited amount of data usually lacks robustness. Neural network model robustness can be enhanced by combining multiple neural networks. There are several approaches for combining neural networks. A comparison of these methods on three non-linear dynamic system modelling case studies is carried out in this paper. It is shown that selective combination and combining networks of various structures generally improve model performance.

CN 110706200 A discloses a data prediction method, which includes: obtaining CT image data containing a lesion; and on the basis of a preset multi-task gradient integrated neural network model, predicting a sign corresponding to image data to obtain a prediction result.

CN 110503640 A discloses a device for analyzing medical images, which includes a processor configured to determine the conditions of various diseases by using a trained learning network based on the medical images. The learning network sequentially includes encoders and recurrent neural network units arranged corresponding one-to-one to the diseases.

### SUMMARY

To resolve the foregoing technical problems, this application provides a segmentation method and apparatus for a pneumonia sign, a computer-readable storage medium, and an electronic device. A lung region image in a CT image is input into each of a plurality of neural network models to obtain a plurality of pneumonia sign images separately; and the plurality of pneumonia sign images are combined to obtain a pneumonia comprehensive sign image. Pneumonia sign images in a large number of to-be-detected CT images may be obtained efficiently and accurately by using the neural network models, so as to provide reliable data basis for subsequent pneumonia diagnosis.

According to an aspect of this application, a segmentation method for a pneumonia sign is provided, including: separately generating a plurality of pneumonia sign images based on a lung region image in a CT image; and combining the plurality of pneumonia sign images to obtain a pneumonia comprehensive sign image. The separately generating a plurality of pneumonia sign images includes: inputting the lung region image into each of a plurality of neural network models obtained through training based on different pneumonia signs, and segmenting the pneumonia signs in the lung region image by using the plurality of neural network models respectively, to obtain the plurality of pneumonia sign images. A method for obtaining the lung region image includes: obtaining a rib region image in the CT image; obtaining a coarse segmentation image of a lung region in the CT image; and expanding around to a boundary of the lung region at a preset step length by taking the rib region image as the boundary of the lung region and the coarse segmentation image as a seed region to obtain the lung region image.

In an embodiment, the plurality of pneumonia sign images include any one or a combination of more of the following sign images: a lung consolidation image, a ground-glass opacity image, a lump image, a tree-in-bud sign image, a nodule image, a cavity image, and a halo sign image.

In an embodiment, the lung region image includes multiple layers of two-dimensional images; and the inputting the lung region image into each of a plurality of neural network models obtained through training based on different pneumonia signs, and segmenting the pneumonia signs in the lung region image by using the plurality of neural network models respectively, to obtain the plurality of pneumonia sign images includes: inputting, in batches, the multiple layers of two-dimensional images into each of the plurality of neural network models to obtain multiple layers of two-dimensional sign images corresponding to each of the plurality of pneumonia sign images; and separately superposing multiple layers of two-dimensional sign images corresponding to a same pneumonia sign image to obtain the plurality of pneumonia sign images.

In an embodiment, the lung region image includes multiple layers of two-dimensional images; and the inputting the lung region image into each of a plurality of neural network models obtained through training based on different pneumonia signs, and segmenting the pneumonia signs in the lung region image by using the plurality of neural network models respectively, to obtain the plurality of pneumonia sign images includes: inputting the multiple layers of two-dimensional images into each of the plurality of neural network models to obtain multiple layers of two-dimensional sign images corresponding to each of the plurality of pneumonia sign images; and separately superposing multiple layers of two-dimensional sign images corresponding to a same pneumonia sign image to obtain the plurality of pneumonia sign images.

In an embodiment, after obtaining the plurality of pneumonia sign images, the segmentation method further includes: performing a corrosion and expansion operation on each of the plurality of pneumonia sign images.

In an embodiment, after the obtaining a coarse segmentation image of a lung region in the CT image, the segmentation method further includes: performing a corrosion operation on the coarse segmentation image to obtain a coarse segmentation image after corrosion; and the expanding around to a boundary of the lung region at a preset step length by taking the rib region image as the boundary of the lung region and the coarse segmentation image as a seed region to obtain the lung region image includes: expanding around to the boundary of the lung region at a preset step length by taking the rib region image as the boundary of the lung region and the coarse segmentation image obtained after corrosion as the seed region to obtain the lung region image.

In an embodiment, the step of expanding around to a boundary of the lung region at a preset step length by taking the rib region image as the boundary of the lung region and the coarse segmentation image as a seed region to obtain the lung region image, is performed, based on an active contour model.

In an embodiment, the step of expanding around to the boundary of the lung region at a preset step length by taking the rib region image as the boundary of the lung region and the coarse segmentation image obtained after corrosion as the seed region to obtain the lung region image, is performed, based on an active contour model.

In an embodiment, a method for obtaining the rib region image includes: obtaining a bone region image in the CT image based on a CT value of a bone; and segmenting, based on a characteristic of a rib, a rib region in the bone region image to obtain the rib region image.

In an embodiment, before the obtaining a coarse segmentation image of a lung region in the CT image, the segmentation method further includes: performing preprocessing on the CT image, where the preprocessing includes any one or a combination of more of the following operations: background removal, white noise elimination, image cropping, and changing of window width and window level.

In an embodiment, the segmentation method further includes: performing smoothing processing on a boundary of the lung region image.

According to another aspect of this application, a segmentation apparatus for a pneumonia sign is provided, including: an obtaining module, configured to obtain a rib region image in a CT image; a coarse segmentation module, configured to obtain a coarse segmentation image of a lung region in the CT image; a fine segmentation module, configured to expand around to a boundary of the lung region at a preset step length by taking the rib region image as the boundary of the lung region and the coarse segmentation image as a seed region to obtain a lung region image; a generating module, configured to separately generate a plurality of pneumonia sign images based on the lung region image in the CT image; and a combing module, configured to combine the plurality of pneumonia sign images to obtain a pneumonia comprehensive sign image. The generating module is further configured to: input the lung region image into each of a plurality of neural network models obtained through training based on different pneumonia signs, and segment the pneumonia signs in the lung region image by using the plurality of neural network models respectively, to obtain the plurality of pneumonia sign images.

According to still another aspect of this application, a computer-readable storage medium is provided, the storage medium stores a computer program, and the computer program is used to implement the segmentation method for a pneumonia sign according to any one of the foregoing embodiments.

According to yet another aspect of this application, an electronic device is provided. The electronic device includes: a processor; and a memory configured to store an instruction executable by the processor. The processor is configured to implement the segmentation method for a pneumonia sign according to any one of the foregoing embodiments.

According to a segmentation method and apparatus for a pneumonia sign, a computer-readable storage medium, and an electronic device provided in this application, a lung region image in a CT image is input into each of a plurality of neural network models to obtain a plurality of pneumonia sign images separately; and the plurality of pneumonia sign images are combined to obtain a pneumonia comprehensive sign image. Pneumonia sign images in a large number of to-be-detected CT images may be obtained efficiently and accurately by using the neural network models, so as to provide reliable data basis for subsequent pneumonia diagnosis.

### BRIEF DESCRIPTION OF DRAWINGS

Through a more detailed description of the embodiments of this application with reference to the accompanying drawings, the above and other purposes, features and advantages of this application will become more obvious. The accompanying drawings illustrated herein are provided for a further understanding of this application, and constitute a part of this application. The accompanying drawings and the embodiments described herein are used to explain this application and do not constitute a limitation to this application. In the accompanying drawings, a same reference symbol is used for representing a same component or step.
FIG. 1 is a schematic flowchart of a segmentation method for a pneumonia sign according to an exemplary embodiment of this application.
FIG. 2 is a schematic flowchart of a segmentation method for a pneumonia sign according to another exemplary embodiment of this application.
FIG. 3 is a schematic flowchart of a segmentation method for a pneumonia sign according to another exemplary embodiment of this application.
FIG. 4 is a schematic flowchart of a segmentation method for a lung region image according to an exemplary embodiment of this application.
FIG. 5 is a schematic flowchart of a segmentation method for a lung region image according to another exemplary embodiment of this application.
FIG. 6 is a schematic flowchart of an obtaining method for a rib region image according to an exemplary embodiment of this application.
FIG. 7 is a schematic flowchart of a segmentation method for a lung region image according to another exemplary embodiment of this application.
FIG. 8 is a schematic flowchart of a segmentation method for a lung region image according to another exemplary embodiment of this application.
FIG. 9 is a schematic structural diagram of a segmentation apparatus for a pneumonia sign according to an exemplary embodiment of this application.
FIG. 10 is a structural diagram of an electronic device according to an exemplary embodiment of this application.

### DETAILED DESCRIPTION

Exemplary embodiments of this application will be described below in detail with reference to the accompanying drawings. Apparently, the described embodiments are merely some rather than all of the embodiments of this application. It should be understood that, this application is not limited by the exemplary embodiments described herein.

### Overview

Pneumonia is an inflammation of lungs caused by a variety of factors. For pneumonia patients, the illness is often accompanied by severe coughing. Pneumonia is divided into bacterial pneumonia and viral pneumonia. Bacterial pneumonia is caused by bacteria invading lungs, the most common bacteria are pneumococcus and alpha hemolytic streptococcus, and most bacterial pneumonia is caused by these two bacteria. Viral pneumonia is caused by a virus. The most common viral pneumonia is influenza caused by first-level cytomegalovirus. Another example is 2019 novel coronavirus. Viral pneumonia is more serious and more difficult to treat compared to bacterial pneumonia.

As described above, CT image detection is one of the most important and accurate methods for detecting whether a person is infected with pneumonia, especially for detection of pneumonia caused by novel coronavirus. Generally, after a CT image is obtained, a lung region in the image needs to be segmented to obtain a lung region image, and then a pneumonia sign in the lung region is segmented. Based on the pneumonia sign obtained through segmentation, whether a person is infected with pneumonia is finally determined by a doctor. Currently, a pneumonia sign is usually obtained through manual segmentation by professional medical staff, which is obviously inefficient, especially for detection of pneumonia caused by highly infectious novel coronavirus, because novel coronavirus is highly infectious, and may cause a large number of people to have the risk of infection. In this case, CT image detection needs to be performed for those people. However, CT image detection requirements for a large number of people cannot be met due to a limited quantity or even a shortage of medical staff.

With rapid development of image processing technologies, more and more medical images can be processed by computers. For example, an image of a region of interest or basic data that is needed for diagnosis is obtained through image segmentation. However, there are a plurality of pneumonia signs. A density (represented by a CT value in a CT image) of some signs in a CT image is quite different from those of other tissues, and these signs are easy to be segmented. A density of some signs in a CT image is less different from those of other tissues, and these signs are difficult to be segmented through density comparison, or the segmentation precision is not high. In the meanwhile, pneumonia patients often cough and inhale insufficiently, which leads to high motion noise of an image and high density in the lungs, and consequently results in a greater difficulty in segmentation of a lung region. In addition, a large pneumonia lesion area affects a shape and a structure of the lung, which further increases the difficulty of segmentation of the lung region, affecting precision of segmentation of the pneumonia sign, and producing certain errors. Moreover, transmission and accumulation of the errors will ultimately affect the judgment of doctors, resulting in inestimable consequences.

According to a segmentation method and apparatus for a pneumonia sign, a computer-readable storage medium, and an electronic device provided in this application to resolve the foregoing problems, a lung region image in a CT image is input into each of a plurality of neural network models to obtain a plurality of pneumonia sign images separately; and the plurality of pneumonia sign images are combined to obtain a pneumonia comprehensive sign image. Pneumonia sign images in a large number of to-be-detected CT images may be obtained efficiently and accurately by using the neural network models, so as to provide reliable data basis for subsequent pneumonia diagnosis.

### Exemplary Methods

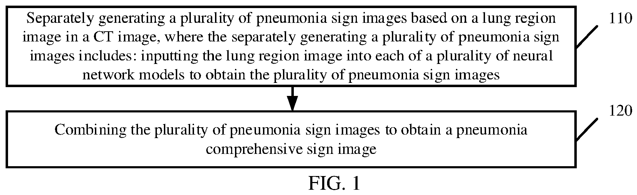

FIG. 1 is a schematic flowchart of a segmentation method for a pneumonia sign according to an exemplary embodiment of this application. As shown in FIG. 1, the method includes the following steps.

Step 110: separately generating a plurality of pneumonia sign images based on a lung region image in a CT image, where the separately generating a plurality of pneumonia sign images includes: inputting the lung region image into each of a plurality of neural network models to obtain the plurality of pneumonia sign images.

A lung region image of a detected person can be obtained by shooting a CT image, and based on the lung region image, whether the detected person is infected with pneumonia can be accurately determined. For currently severe novel coronavirus pneumonia, to contain the spread of the virus, it is necessary to isolate patients infected with pneumonia or carrying the virus from other groups of people. In this case, suspected people need to be screened. As one of the effective measures to screen pneumonia patients, CT image detection is particularly important. However, CT image detection is relatively complex and inefficient. In addition, there are a plurality of pneumonia signs, and whether pneumonia is caused and the degree of pneumonia can be comprehensively determined after learning all or a plurality of signs. Some of these signs are relatively more difficult to obtain, which further increases a difficulty of CT image detection. Therefore, in the embodiments of this application, a lung region image is input into each of a plurality of neural network models. Different neural network models are obtained through training based on different pneumonia signs, so that higher-precision pneumonia signs images may be obtained in a targeted manner to provide accurate data basis for subsequent screening of pneumonia.

In an embodiment, the pneumonia sign images may include any one or a combination of more of the following sign images: a lung consolidation image, a ground-glass opacity image, a lump image, a tree-in-bud sign image, a nodule image, a cavity image, and a halo sign image. Lung consolidation refers to a lesion that air-filled cavities on the distal side of terminal bronchioles are filled with pathological liquids, cells, and tissues. A main feature thereof is that the lesion area is compact and blood vessels cannot be developed. Ground-glass opacity refers to a lesion shadow indicating that the lung density is slightly increased due to alveolar filling or interstitial thickening caused by a variety of reasons, but blood vessels in the shadow are still visible. A lump refers to a mass-like high-density shadow, and its maximum diameter is greater than or equal to 3 cm. A nodule refers to a nodular high-density shadow, and its maximum diameter is less than 3 cm. A cavity refers to a transparent region that is formed in lungs after necrotic and liquefactive pathological tissues are drained via bronchial tubes and air is introduced. For infectious diseases, a cavity tends to be pyogenic infection clinically. A tree-in-bud sign looks like a budding branch of a spring budding tree and that is formed by shadows of branch lines and small nodules caused due to lesions in terminal bronchioles and alveolar space. Those nodules and branches are mostly 2 mm to 4 mm sized nodular and tree like high-density shadows at the peripheral bronchial ends of lungs. A halo sign refers to a ring-like glass-like density shadow around a nodule/cavity, which usually represents exudation, bleeding or edema. Different neural network models may be set based on different features of signs to obtain lung region images separately through segmentation, so as to improve overall segmentation precision.

In an embodiment, the neural network model may be a deep learning neural network model. Preferably, the neural network model may be a Unet neural network model. In an embodiment, a training method for the neural network model may include: selecting a lung region image, with a pneumonia sign labelled, obtained through segmentation by professional medical staff as a training sample of the neural network model to train the neural network model; and verifying and modifying, by a third-party detection institution, a segmentation result obtained during segmentation based on the neural network model. A modified result may be used as a training sample to train the neural network model again, so as to further improve segmentation precision of the neural network model. It should be understood that, the plurality of neural network models in the embodiments of this application may be of a same type, or may be of different types. A specific type of a neural network model used for segmenting a pneumonia sign is not limited in the embodiments of this application.

Step 120: combining the plurality of pneumonia sign images to obtain a pneumonia comprehensive sign image.

Generally, pneumonia is comprehensively determined based on a plurality of pneumonia signs. For example, whether a detected person is infected with pneumonia cannot be determined based on a nodule image without another pneumonia sign. Therefore, after a plurality of pneumonia sign images (pneumonia sign areas generally labelled in a CT image) are obtained separately, the plurality of pneumonia sign images are combined to obtain a pneumonia comprehensive sign image, so that it is convenient for medical staff or other detection institutions to accurately determine whether the detected person is a pneumonia patient based on the pneumonia comprehensive sign image.

According to the segmentation method for a pneumonia sign, a lung region image in a CT image is input into each of a plurality of neural network models to obtain a plurality of pneumonia sign images separately; and the plurality of pneumonia sign images are combined to obtain a pneumonia comprehensive sign image. Pneumonia sign images in a large number of to-be-detected CT images may be obtained efficiently and accurately by using the neural network models, so as to provide reliable data basis for subsequent pneumonia diagnosis.

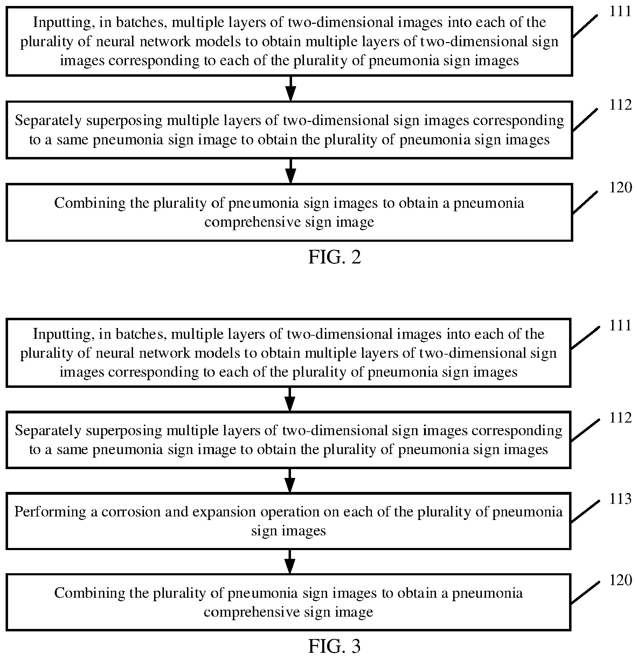

FIG. 2 is a schematic flowchart of a segmentation method for a pneumonia sign according to another exemplary embodiment of this application. A lung region image includes multiple layers of two-dimensional images. As shown in FIG. 2, Step 110 may specifically include the following steps.

Step 111: inputting, in batches, multiple layers of two-dimensional images into each of the plurality of neural network models to obtain multiple layers of two-dimensional sign images corresponding to each of the plurality of pneumonia sign images.

The segmentation of two-dimensional images is less difficult and faster than that of three-dimensional images. A CT image includes multiple layers of two-dimensional images, and a lung region image in a CT image also includes multiple layers of two-dimensional images. Therefore, in order to improve segmentation efficiency, multiple layers of two-dimensional images of a lung region image may be divided into a plurality of parts. The plurality of parts are input into each of a plurality of neural network models for a plurality of times, so that each of the plurality of neural network models separately segment the two-dimensional images for a plurality of times to obtain corresponding multiple layers of two-dimensional sign images, thereby improving segmentation efficiency. It should be understood that, the number of layers of two-dimensional images to be input into a neural network model at a time may be properly selected based on a processing capacity of a neural network or processing machine, and the number may be one or multiple. Alternatively, all two-dimensional images may be input into a neural network model at a time, provided that the number of selected layers does not exceed a load borne by the neural network model or processing machine. The specific number of layers of a two-dimensional image to be input into a neural network model at a time is not limited in the embodiments of this application.

Step 112: separately superposing multiple layers of two-dimensional sign images corresponding to a same pneumonia sign image to obtain the plurality of pneumonia sign images.

After multiple layers of two-dimensional sign images of each pneumonia sign are obtained, the multiple layers of two-dimensional sign images of a same pneumonia sign image are superposed to obtain the pneumonia sign image. In an embodiment, an overlapping part exists between some of two-dimensional images input into a neural network model at adj acent times. By setting the overlapping part, a large difference between edge two-dimensional images may be avoided. Besides, superposing may be implemented better by locating the overlapping part.

In another embodiment, the segmentation method shown in FIG. 1 may further include: performing a corrosion and expansion operation on each of the plurality of pneumonia sign images.

FIG. 3 is a schematic flowchart of a segmentation method for a pneumonia sign according to another exemplary embodiment of this application. As shown in FIG. 3, after Step 112, the foregoing embodiments may further include the following step.

Step 113: performing a corrosion and expansion operation on each of the plurality of pneumonia sign images.

A corrosion operation is a morphological operation. A specific process of the corrosion operation is: removing pixels along a boundary of an object in an image to reduce a size of the object, that is, narrowing the boundary of the object to remove noise of the object in the image. An expansion operation is also a morphological operation. A specific process of the expansion operation is just the opposite of the corrosion operation, namely, increasing pixels along a boundary of an object in an image to increase a size of the object. Noise generated during a segmentation process may be removed effectively through a corrosion and expansion operation. Meanwhile, because adjacent two-dimensional sign images are correlated with each other, by performing a corrosion and expansion operation on a superposed pneumonia sign image, segmentation errors of some layers may be eliminated by using the correlation between adjacent two-dimensional sign images. For example, a two-dimensional sign image at an intermediate layer may be adjusted by using two-dimensional sign images at upper and lower layers or a plurality of layers, thereby improving an overall segmentation precision of pneumonia sign images.

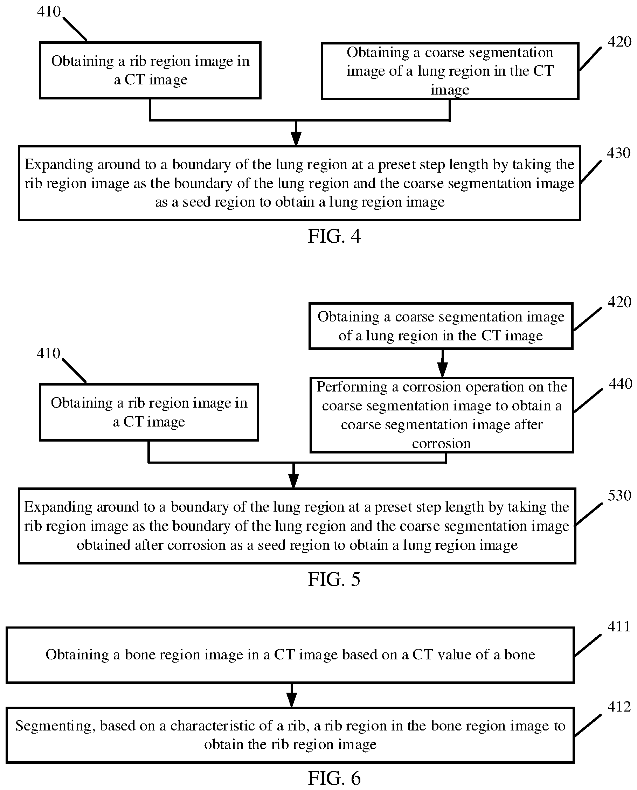

FIG. 4 is a schematic flowchart of a segmentation method for a lung region image according to an exemplary embodiment of this application. As shown in FIG. 4, the method includes the following steps.

Step 410: obtaining a rib region image in a CT image.

Ribs tightly wrap around a lung region, and a lung shape and characteristics of some regions of a pneumonia patient affect imaging of a CT image, but ribs of the pneumonia patient does not change due to illness. Therefore, an outer boundary of a lung region can be obtained by obtaining the rib region in the CT image, thereby improving segmentation precision of the lung region.

Step 420: obtaining a coarse segmentation image of a lung region in the CT image.

In an embodiment, a specific implementation of Step 420 may be: inputting the CT image into a neural network model to obtain a coarse segmentation image of the lung region. A lung region in a CT image can be identified by using a neural network model. The neural network model may be a Unet neural network model or the like. A training method of the neural network model may include: selecting a CT image with a lung region identified and labelled by professional medical staff as a training sample of the neural network model to train the neural network model. In this step, only the coarse segmentation image of the lung region in the CT image is obtained, rather than an accurate segmentation image of the lung region. Therefore, a proper quantity of training samples may be selected to train the neural network model, so as to improve an overall segmentation efficiency of the lung.

In another embodiment, a specific implementation of Step 420 may alternatively be: selecting, based on a CT value of the lung region, a region whose CT value is in a CT value range of the lung region as the coarse segmentation image. A CT value is a measurement unit for measuring a density of a local tissue or organ of a human body, and is commonly known as Hounsfield Unit (HU). ACT value of air is -1000, and a CT value of compact bone is +1000. In fact, a CT value is a corresponding value of each tissue in a CT image that is equivalent to an X-ray attenuation coefficient. The CT value is not an absolutely constant value. The CT value is not only related to internal factors of a human body such as respiration, blood flow and the like, but also related to external factors, such as X-ray tube voltage, CT apparatus, room temperature and the like. CT values of human tissues except skeleton ranges from -80 to 300. ACT value of a calcification point ranges from 80 to 300, and a CT value of fat ranges from -20 to -80. A lung region is basically filled with air, a CT value of the lung region is relatively lower than that of another tissues. Therefore, a CT value range may be set, and a connected region whose CT value is in the CT value range is selected as the coarse segmentation image of the lung region.

Step 430: expanding around to a boundary of the lung region at a preset step length by taking the rib region image as the boundary of the lung region and the coarse segmentation image as a seed region to obtain a lung region image.

In an embodiment, a specific implementation of Step 430 may be: based on an active contour model, segmenting the CT image at a preset step length by taking the rib region image as the boundary and the coarse segmentation image as a region of interest to obtain the lung region image. A lung is tightly wrapped by ribs, that is, a rib region is an outer boundary of a lung region. Therefore, a coarse segmentation image may be used as a seed region or an region of interest, a rib region image may be used as a boundary, and a CT image may be segmented at a preset step length based on an active contour model, that is, expanding around from the region of interest at a preset step length to a rib region to obtain an accurately segmented lung region image, so as to provide accurate basic image data for subsequent pulmonary lobes segmentation, pneumonia judgement, etc. The preset step length may be adjusted according to actual requirements. To reach higher precision, the preset step length may be properly reduced. In a further embodiment, the active contour model may include a Level Set model or a Snake model. It should be understood that, in the embodiments of this application, different active contour models may be selected according to actual application scenarios, provided that based on a selected active contour model, an accurate lung region image may be obtained by taking a rib region image as a boundary and a coarse segmentation image as a seed region. A specific structure of an active contour model is not limited in the embodiments of this application.

FIG. 5 is a schematic flowchart of a segmentation method for a lung region image according to another exemplary embodiment of this application. As shown in FIG. 5, after Step 420, the foregoing embodiments may further include the following step.

Step 440: performing a corrosion operation on the coarse segmentation image to obtain a coarse segmentation image after corrosion.

A coarse segmentation image of a lung region is usually not an accurate lung region image. For example, a coarse segmentation image may include another region other than a lung region. The other region is a noise region in the coarse segmentation image. The noise region in the coarse segmentation image may be removed through a corrosion operation, to ensure that the coarse segmentation image obtained after corrosion includes a part of the lung region, but does not include a region other than the lung region.

In addition, Step 430 is adjusted to Step 530: expanding around to a boundary of the lung region at a preset step length by taking the rib region image as the boundary of the lung region and the coarse segmentation image obtained after corrosion as a seed region to obtain a lung region image.

A seed region only needs to be a part of a lung region, not all of the lung region. Therefore, a corrosion operation may be performed to ensure that a seed region includes only the lung region, so as to prevent more non-lung regions from merging into the seed region during expansion. Since a region already existing in a seed region is not removed during expansion of the seed region, a precondition for ensuring segmentation precision of the lung region is that the seed region includes only the lung region.

FIG. 6 is a schematic flowchart of an obtaining method for a rib region image according to an exemplary embodiment of this application. As shown in FIG. 6, the obtaining method may include the following steps.

Step 411: obtaining a bone region image in a CT image based on a CT value of a bone.

An image of a bone region whose CT value is the greatest in a CT image may be obtained base on CT values of various regions in the CT image. In an embodiment, a first CT value threshold may be set based on a CT value of a bone. A connected region whose CT value is greater than or equal to the first CT value threshold in the CT image is obtained as the bone region image. The first CT value threshold is less than a CT value of the bone and greater than CT values of other tissues. The bone region image may be obtained by setting the first CT value threshold and obtaining a connected region whose CT value is greater than or equal to the first CT value threshold in the CT image.

In an embodiment, after the obtaining a connected region whose CT value is greater than or equal to the first CT value threshold in the CT image, the method may further include: removing a region whose area is less than a preset area threshold in the connected region. If the first CT value threshold is set too large, part of the bone region may be missed. If the first CT value threshold is set too small, a calcification point that possibly exists in a lung or heart region may become an interference noise in the bone region image due to a large CT value of the calcification point. Therefore, the calcification point needs to be removed. Generally, an area of a calcification point is relatively small. Therefore, the interference of the calcification point on the bone region image may be eliminated by removing a region whose area is less than a preset area threshold in the connected region. The area threshold may be preset according to actual application.

In an embodiment, after the obtaining a connected region whose CT value is greater than or equal to the first CT value threshold in the CT image, the method may further include: removing a connected region in the coarse segmentation image. Removing the connected region in the coarse segmentation image may prevent a calcification point in the lung or heart region from affecting a final segmentation result, so as to improve subsequent segmentation precision.

Step 412: segmenting, based on a characteristic of a rib, a rib region in the bone region image to obtain the rib region image.

In an embodiment, an implementation of Step 412 may be: comparing a standard rib image with the bone region image, and selecting a bone region with a similarity to the standard rib image being greater than a preset similarity in the bone region image as the rib region image. Ribs are relatively more regular than other bones, are usually regularly arranged on an outer side of the lungs in an arc shape, and have a left-right symmetrical structure. In a multi-planner reconstructed three-dimensional view, ribs may be differentiated from other bones. Especially in a sagittal view, the above-mentioned characteristics of ribs may be clearly learned, that is, ribs have their particularities in arrangement and shape. Therefore, a standard rib image may be used for comparison, and a bone region with a similarity to the standard rib image meeting a certain requirement (being greater than a preset similarity) in the bone region image may be selected, so as to segment a rib region in the bone region image, and further obtain the rib region image. It should be understood that, other methods for obtaining a rib region image may also be selected in the embodiments of this application according to actual application scenario requirements. For example, the rib region image may be determined based on whether a radian of ribs is in a preset radian range, may be determined based on whether a gap between ribs is in a preset distance range (because ribs are arranged according to a certain rule, a vertical distance, at any part, between every two adjacent ribs is in a certain range), or may be directly obtained by using a neural network model, provided that a selected method for obtaining the rib region image meets a precision requirement. A specific method for obtaining a rib region image is not limited in the embodiments of this application.

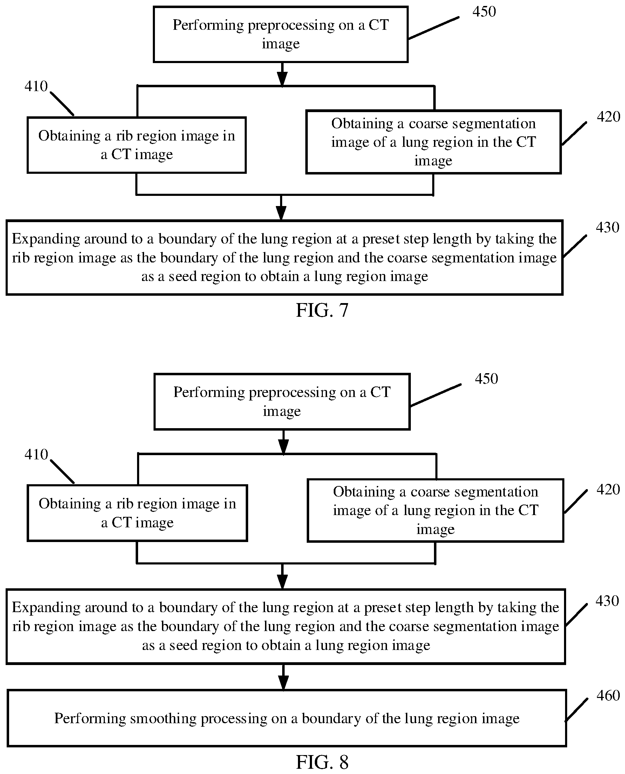

FIG. 7 is a schematic flowchart of a segmentation method for a lung region image according to another exemplary embodiment of this application. As shown in FIG. 7, before Step 420, the foregoing embodiments may further include the following step.

Step 450: performing preprocessing on a CT image.

In an embodiment, the preprocessing may include any one or a combination of more of the following operations: background removal, white noise elimination, image cropping, and changing of window width and window level. A specific implementation of background removal may be: by setting a CT value range, obtaining a connected region within the set CT value range, retaining only a connected region having the largest area in the connected region, and setting other regions as background regions, so as to eliminate interference caused by the other regions. A specific implementation of white noise elimination may be: removing, by using a Gaussian filter, white noise caused during CT image shooting. A specific implementation of image cropping may be: removing the background, and retaining only an effective area, so as to reduce complexity of subsequent image processing. A specific implementation of changing of window width and window level may be: setting values of a window width and a window level to highlight a region of interest, so as to avoid interference with subsequent processing caused by a region with no interest. In the embodiments of this application, a window level may be set to -500, and a window width may be set to 1500. Certainly, it should be understood that, set values of the window level and the window width may be adjusted according to actual conditions.

It should be understood that, Step 450 may be performed before Step 410. The background and other interference factors in the CT image are removed by preprocessing, so that complexity of subsequent steps may be effectively reduced, thereby improving lung segmentation efficiency.

FIG. 8 is a schematic flowchart of a segmentation method for a lung region image according to another exemplary embodiment of this application. As shown in FIG. 8, after Step 430, the foregoing embodiments may further include the following step.

Step 460: performing smoothing processing on a boundary of the lung region image.

Since only partial boundary of a lung region can be determined based on a rib region image, and expansion is performed at a same preset step length based on an active contour model, the boundary of the obtained lung region image may be unsmooth. After the lung region image is obtained, smoothing processing is performed on the boundary of the lung region image, so that a more accurate lung region image may be obtained.

### Exemplary Apparatuses

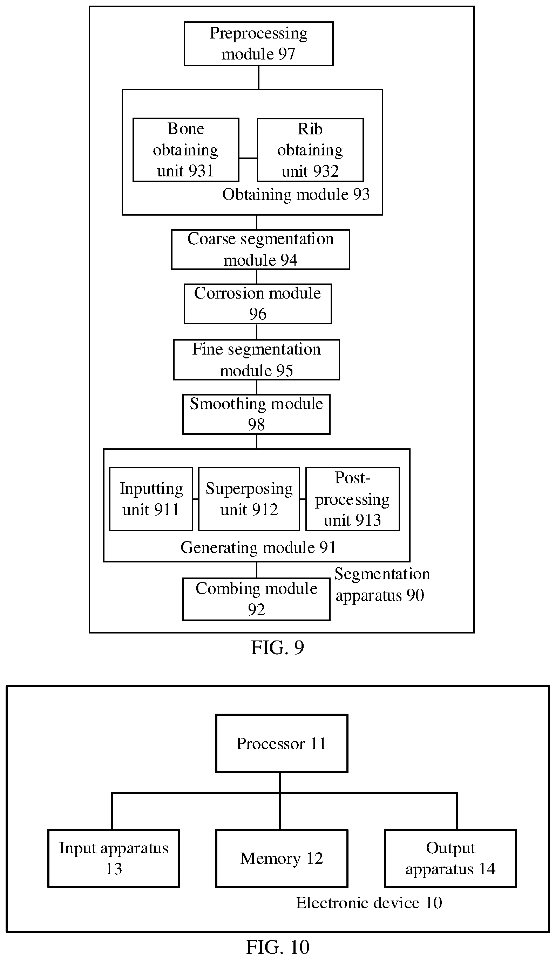

FIG. 9 is a schematic structural diagram of a segmentation apparatus 90 for a pneumonia sign according to an exemplary embodiment of this application. As shown in FIG. 9, the segmentation apparatus 90 for a pneumonia sign includes the following modules.

A generating module 91, configured to separately generate a plurality of pneumonia sign images based on a lung region image in a CT image; and a combing module 92, configured to combine the plurality of pneumonia sign images to obtain a pneumonia comprehensive sign image. The generating module 91 is further configured to input the lung region image into each of a plurality of neural network models to obtain the plurality of pneumonia sign images.

According to the segmentation apparatus for a pneumonia sign provided in this application, a lung region image in a CT image is input by using the generating module 91 into each of a plurality of neural network models to obtain a plurality of pneumonia sign images separately; and the plurality of pneumonia sign images are combined by using the combing module 92 to obtain a pneumonia comprehensive sign image. Pneumonia sign images in a large number of to-be-detected CT images may be obtained efficiently and accurately by using the neural network models, so as to provide reliable data basis for subsequent pneumonia diagnosis.

In an embodiment, the pneumonia sign images may include any one or a combination of more of the following sign images: a lung consolidation image, a ground-glass opacity image, a lump image, a tree-in-bud sign image, a nodule image, a cavity image, and a halo sign image. In an embodiment, the neural network model may be a deep learning neural network model. Preferably, the neural network model may be a Unet neural network model.

In an embodiment, the lung region image includes multiple layers of two-dimensional images. As shown in FIG. 9, the generating module 91 may include the following units: an inputting unit 911, configured to input, in batches, the multiple layers of two-dimensional images into each of the plurality of neural network models to obtain multiple layers of two-dimensional sign images corresponding to each of the plurality of pneumonia sign images; and a superposing unit 912, configured to separately superpose multiple layers of two-dimensional sign images corresponding to a same pneumonia sign image to obtain the plurality of pneumonia sign images.

In an embodiment, the lung region image includes multiple layers of two-dimensional images. As shown in FIG. 9, the generating module 91 may include the following units: an inputting unit 911, configured to input the multiple layers of two-dimensional images into each of the plurality of neural network models to obtain multiple layers of two-dimensional sign images corresponding to each of the plurality of pneumonia sign images; and a superposing unit 912, configured to separately superpose multiple layers of two-dimensional sign images corresponding to a same pneumonia sign image to obtain the plurality of pneumonia sign images.

In an embodiment, as shown in FIG. 9, the generating module 91 may further include: a post-processing unit 913, configured to perform a corrosion and expansion operation on each of the plurality of pneumonia sign images.

In an embodiment, as shown in FIG. 9, the segmentation apparatus 90 may further include: an obtaining module 93, configured to obtain a rib region image in the CT image; a coarse segmentation module 94, configured to obtain a coarse segmentation image of a lung region in the CT image; and a fine segmentation module 95, configured to expand around to a boundary of the lung region at a preset step length by taking the rib region image as the boundary of the lung region and the coarse segmentation image as a seed region to obtain the lung region image.

In an embodiment, the coarse segmentation module 94 may be further configured to input the CT image into a neural network model to obtain a coarse segmentation image of the lung region.

In an embodiment, the coarse segmentation module 94 may be further configured to select, based on a CT value of the lung region, a region whose CT value is in a CT value range of the lung region as the coarse segmentation image.

In an embodiment, the fine segmentation module 95 may be further configured to: based on an active contour model, segment the CT image at a preset step length by using the rib region image as the boundary and the coarse segmentation image as a region of interest to obtain the lung region image. The active contour model may include a Level Set model or a Snake model.

In an embodiment, as shown in FIG. 9, the segmentation apparatus 90 may further include: a corrosion module 96, configured to perform a corrosion operation on the coarse segmentation image to obtain a coarse segmentation image after corrosion. The fine segmentation module 95 is configured to: expand around to the boundary of the lung region at a preset step length by taking the rib region image as the boundary of the lung region and the coarse segmentation image obtained after corrosion as the seed region to obtain the lung region image.

In an embodiment, the fine segmentation module 95 may be further configured to: based on an active contour model, segment the CT image at a preset step length by taking the rib region image as the boundary and the coarse segmentation image obtained after corrosion as a region of interest to obtain the lung region image. The active contour model may include a Level Set model or a Snake model.

In an embodiment, as shown in FIG. 9, the obtaining module 93 may include: a bone obtaining unit 931, configured to obtain a bone region image in the CT image based on a CT value of a bone; and a rib obtaining unit 932, configured to segment, based on a characteristic of a rib, a rib region in the bone region image to obtain the rib region image.

In an embodiment, the bone obtaining unit 931 may be further configured to: set a first CT value threshold based on a CT value of a bone, and obtain a connected region whose CT value is greater than or equal to the first CT value threshold in the CT image as the bone region image.

In an embodiment, the obtaining module 93 may be further configured to: after obtaining the connected region whose CT value is greater than or equal to the first CT value threshold in the CT image, remove a region whose area is less than a preset area threshold in the connected region.

In an embodiment, the obtaining module 93 may be further configured to: after obtaining the connected region whose CT value is greater than or equal to the first CT value threshold in the CT image, remove a connected region in the coarse segmentation image.

In an embodiment, the rib obtaining unit 932 may be further configured to: compare a standard rib image with the bone region image, and select a bone region with a similarity to the standard rib image being greater than a preset similarity in the bone region image as the rib region image.

In an embodiment, as shown in FIG. 9, the segmentation apparatus 90 may further include: a preprocessing module 97, configured to perform preprocessing on the CT image. In an embodiment, the preprocessing may include any one or a combination of more of the following operations: background removal, white noise elimination, image cropping, and changing of window width and window level.

In an embodiment, as shown in FIG. 9, the segmentation apparatus 90 may further include: a smoothing module 98, configured to perform smoothing processing on a boundary of the lung region image.

### Exemplary Electronic Devices

The following describes an electronic device 10 provided in an embodiment of this application with reference to FIG. 10. The electronic device 10 may be any one or both of a first device and a second device, or may be single unit equipment independent of them. The single unit equipment may communicate with the first device and the second device, so as to receive collected input signals from them.

FIG. 10 is a block diagram of an electronic device 10 according to an embodiment of this application.

As shown in FIG. 10, the electronic device 10 includes one or more processors 11 and a memory 12.

The processor 11 may be a Central Processing Unit (CPU) or a processing unit in another form that has a data handling capacity and/or instruction execution capacity, and may control another component in the electronic device 10 to perform a desired function.

The memory 12 may include one or more computer program products. The computer program product may include computer-readable storage media in various forms, for example, a volatile memory and/or a nonvolatile memory. The volatile memory may include, for example, a Random Access Memory (RAM) and/or a cache memory (cache). The nonvolatile memory may include, for example, a Read-Only Memory (ROM), a hard disk, and a flash memory. The computer-readable storage medium may store one or more computer program instructions. The processor 11 can run the program instruction, to implement the segmentation method for a pneumonia sign according to the foregoing embodiments of this application and/or another desired function. The computer-readable storage medium may further store various content such as an input signal, a signal component, and a noise component.

In an example, the electronic device 10 may further include an input apparatus 13 and an output apparatus 14. These components may be interconnected to each other by using a bus system and/or a connecting mechanism in another form (not shown in the figure).

For example, when the electronic device 10 is a first device or second device, the input apparatus 13 may be a CT scanner, configured to obtain a CT image. When the electronic device 10 is single unit equipment, the input apparatus 13 may be a communication network connector, configured to receive collected input signals from the first device and the second device.

In addition, the input apparatus 13 may further include, for example, a keyboard, a mouse, and the like.

The output apparatus 14 may output various information to the outside, including a lung region image, a pneumonia sign image, a pneumonia comprehensive sign image, and the like that are determined. The output apparatus 14 may include, for example, a display, a speaker, a printer, a communication network and a remote output device connected thereto, and the like.

Certainly, for simplicity, FIG. 10 only shows some of components in the electronic device 10 that are related to this application, and does not show components such as a bus, an input/output interface, and the like. In addition, according to a specific application situation, the electronic device 10 may further include another proper component.

### Exemplary Computer Program Products and Computer-Readable Storage Media

In addition to the foregoing methods and devices, the embodiments of this application may alternatively be a computer program product, where the computer program product includes a computer program instruction. When the computer program instruction is run by a processor, the processor implements the steps of the segmentation method for a pneumonia sign according to the embodiments of this application described in section "Exemplary Methods" of this specification.

The computer program product may use one or any combination of more programming languages to write a program code for performing operations in the embodiments of this application, where the programming languages include an object oriented programming language such as Java, C++, and conventional procedural programming language, such as the "C" language or a similar programming language. The program code may be executed entirely on a user computing device, partly on a user computing device, as a stand-alone software package, partly on a user computing device while partly on a remote computing device, or entirely on a remote computing device or server.

In addition, the embodiments of this application may alternatively be a computer-readable storage medium. The computer-readable storage medium stores a computer program instruction. When the computer program instruction is run by a processor, the processor implements the steps of the segmentation method for a pneumonia sign according to the embodiments of this application described in section "Exemplary Methods" of this specification.

The computer-readable storage medium may use one or any combination of more readable media. The readable medium may be a readable signal medium or readable storage medium. The readable storage medium may include, for example, but is not limited to, an electronic, magnetic, optical, electromagnetic, infrared, or semiconductor system, apparatus, or means, or any combination of the above. More specific examples (a non-exhaustive list) of the readable storage medium include an electrical connection having one or more wires, a portable disk, a hard disk, a Random Access Memory (RAM), a Read-Only Memory (ROM), an Erasable Programmable Read-Only Memory (EPROM or a flash memory), an optical fiber, a portable Compact Disc Read-Only Memory (CD-ROM), an optical storage means, a magnetic storage means, or any suitable combination thereof.

## Claims

1. A segmentation method for a pneumonia sign, comprising separately generating (110) a plurality of pneumonia sign images based on a lung region image in a CT image, wherein the separately generating (110) a plurality of pneumonia sign images comprises:
inputting the lung region image into each of a plurality of neural network models obtained through training based on different pneumonia signs, and segmenting the pneumonia signs in the lung region image by using the plurality of neural network models respectively, to obtain the plurality of pneumonia sign images, **characterised by**:
combining (120) the plurality of pneumonia sign images to obtain a pneumonia comprehensive sign image, and
wherein a method for obtaining the lung region image comprises:
obtaining (410) a rib region image in the CT image;
obtaining (420) a coarse segmentation image of a lung region in the CT image; and
expanding (430) around to a boundary of the lung region at a preset step length by taking the rib region image as the boundary of the lung region and the coarse segmentation image as a seed region to obtain the lung region image.

2. The segmentation method according to claim 1, wherein the plurality of pneumonia sign images comprise any one or a combination of more of the following sign images:
a lung consolidation image, a ground-glass opacity image, a lump image, a tree-in-bud sign image, a nodule image, a cavity image, and a halo sign image.

3. The segmentation method according to claim 1 or 2, wherein the lung region image comprises multiple layers of two-dimensional images; and the inputting the lung region image into each of a plurality of neural network models obtained through training based on different pneumonia signs, and segmenting the pneumonia signs in the lung region image by using the plurality of neural network models respectively, to obtain the plurality of pneumonia sign images comprises:
inputting (111), in batches, the multiple layers of two-dimensional images into each of the plurality of neural network models to obtain multiple layers of two-dimensional sign images corresponding to each of the plurality of pneumonia sign images; and
separately superposing (112) multiple layers of two-dimensional sign images corresponding to a same pneumonia sign image to obtain the plurality of pneumonia sign images.

4. The segmentation method according to claim 1 or 2, wherein the lung region image comprises multiple layers of two-dimensional images; and the inputting the lung region image into each of a plurality of neural network models obtained through training based on different pneumonia signs, and segmenting the pneumonia signs in the lung region image by using the plurality of neural network models respectively, to obtain the plurality of pneumonia sign images comprises:
inputting the multiple layers of two-dimensional images into each of the plurality of neural network models to obtain multiple layers of two-dimensional sign images corresponding to each of the plurality of pneumonia sign images; and
separately superposing multiple layers of two-dimensional sign images corresponding to a same pneumonia sign image to obtain the plurality of pneumonia sign images.

5. The segmentation method according to any one of claims 1 to 4, wherein after obtaining the plurality of pneumonia sign images, the segmentation method further comprises:
performing (113) a corrosion and expansion operation on each of the plurality of pneumonia sign images.

6. The segmentation method according to claim 1, wherein after the obtaining (420) a coarse segmentation image of a lung region in the CT image, the segmentation method further comprises:
performing (440) a corrosion operation on the coarse segmentation image to obtain a coarse segmentation image after corrosion; and
the expanding (430) around to a boundary of the lung region at a preset step length by taking the rib region image as the boundary of the lung region and the coarse segmentation image as a seed region to obtain the lung region image comprises:
expanding (530) around to the boundary of the lung region at a preset step length by taking the rib region image as the boundary of the lung region and the coarse segmentation image obtained after corrosion as the seed region to obtain the lung region image.

7. The segmentation method according to claim 1, wherein the step of expanding (430) around to a boundary of the lung region at a preset step length by taking the rib region image as the boundary of the lung region and the coarse segmentation image as a seed region to obtain the lung region image, is performed, based on an active contour model.

8. The segmentation method according to claim 6, wherein the step of expanding (530) around to the boundary of the lung region at a preset step length by taking the rib region image as the boundary of the lung region and the coarse segmentation image obtained after corrosion as the seed region to obtain the lung region image, is performed, based on an active contour model.

9. The segmentation method according to any one of claims 1 to 8, wherein a method for obtaining (410) the rib region image comprises:
obtaining (411) a bone region image in the CT image based on a CT value of a bone; and
segmenting (412), based on a characteristic of a rib, a rib region in the bone region image to obtain the rib region image.

10. The segmentation method according to any one of claims 1 to 9, wherein before the obtaining (420) a coarse segmentation image of a lung region in the CT image, the segmentation method further comprises:
performing (450) preprocessing on the CT image, wherein the preprocessing comprises any one or a combination of more of the following operations: background removal, white noise elimination, image cropping, and changing of window width and window level.

11. The segmentation method according to any one of claims 1 to 10, further comprising:
performing (460) smoothing processing on a boundary of the lung region image.

12. A segmentation apparatus (90) for a pneumonia sign, comprising
a generating module (91), configured to separately generate a plurality of pneumonia sign images based on the lung region image in the CT image; wherein the generating module (91) is further configured to:
input the lung region image into each of a plurality of neural network models obtained through training based on different pneumonia signs, and segment the pneumonia signs in the lung region image by using the plurality of neural network models respectively, to obtain the plurality of pneumonia sign images, **characterized by**:
a combing module (92), configured to combine the plurality of pneumonia sign images to obtain a pneumonia comprehensive sign image;
an obtaining module (93), configured to obtain a rib region image in a CT image;
a coarse segmentation module (94), configured to obtain a coarse segmentation image of a lung region in the CT image; and
a fine segmentation module (95), configured to expand around to a boundary of the lung region at a preset step length by taking the rib region image as the boundary of the lung region and the coarse segmentation image as a seed region to obtain a lung region image.

13. A computer-readable storage medium, **characterized in that**, wherein the storage medium stores a computer program, and the computer program is used to implement the segmentation method for a pneumonia sign according to any one of claims 1 to 11.

14. An electronic device (10), **characterized by**, comprising:
a processor (11); and
a memory (12) configured to store an instruction executable by the processor (11), wherein
the processor (11) is configured to implement the segmentation method for a pneumonia sign according to any one of claims 1 to 11.

## Patentansprüche

1. Ein Segmentierungsverfahren für ein Pneumonieanzeichen, das Folgendes beinhaltet: separates Erzeugen (110) einer Vielzahl von Pneumonieanzeichenbildern auf der Basis eines Lungenbereichsbilds in einem CT-Bild, wobei das separate Erzeugen (110) einer Vielzahl von Pneumonieanzeichenbildern Folgendes beinhaltet:
Einspeisen des Lungenbereichsbilds in jedes einer Vielzahl neuronaler Netzwerkmodelle, die durch Training auf der Basis unterschiedlicher Pneumonieanzeichen erhalten wurden, und Segmentieren der Pneumonieanzeichen in dem Lungenbereichsbild durch jeweilige Verwendung der Vielzahl neuronaler Netzwerkmodelle, um die Vielzahl von Pneumonieanzeichenbildern zu erhalten, **gekennzeichnet durch**:
Kombinieren (120) der Vielzahl von Pneumonieanzeichenbildern, um ein Pneumoniegesamtanzeichenbild zu erhalten, und
wobei ein Verfahren zum Erhalten des Lungenbereichsbilds Folgendes beinhaltet:
Erhalten (410) eines Rippenbereichsbilds in dem CT-Bild;
Erhalten (420) eines Grobsegmentierungsbilds eines Lungenbereichs in dem CT-Bild; und
Ringsumausdehnen (430) zu einer Grenze des Lungenbereichs mit einer vorgegebenen Schrittlänge durch das Festlegen des Rippenbereichsbilds als die Grenze des Lungenbereichs und des Grobsegmentierungsbilds als einen Ausgangsbereich, um das Lungenbereichsbild zu erhalten.

2. Segmentierungsverfahren gemäß Anspruch 1, wobei die Vielzahl von Pneumonieanzeichenbildern ein beliebiges oder eine Kombination von mehreren der folgenden Anzeichenbilder beinhaltet:
ein Lungenverdichtungsbild, ein Opak-wie-Mattglas-Bild, ein Klumpenbild, ein Baumknospenanzeichenbild, ein Knotenbild, ein Hohlraumbild und ein Lichthofanzeichenbild.

3. Segmentierungsverfahren gemäß Anspruch 1 oder 2, wobei das Lungenbereichsbild mehrere Schichten von zweidimensionalen Bildern beinhaltet; und das Einspeisen des Lungenbereichsbilds in jedes einer Vielzahl neuronaler Netzwerkmodelle, die durch Training auf der Basis unterschiedlicher Pneumonieanzeichen erhalten wurden, und das Segmentieren der Pneumonieanzeichen in dem Lungenbereichsbild durch jeweilige Verwendung der Vielzahl neuronaler Netzwerkmodelle, um die Vielzahl von Pneumonieanzeichenbildern zu erhalten, Folgendes beinhalten:
Einspeisen (111), in Sätzen, der mehreren Schichten von zweidimensionalen Bildern in jedes der Vielzahl neuronaler Netzwerkmodelle, um mehrere Schichten von zweidimensionalen Anzeichenbildern zu erhalten, die jedem der Vielzahl von Pneumonieanzeichenbildern entsprechen; und
separates Überlagern (112) mehrerer Schichten von zweidimensionalen Anzeichenbildern, die einem gleichen Pneumonieanzeichenbild entsprechen, um die Vielzahl von Pneumonieanzeichenbildern zu erhalten.

4. Segmentierungsverfahren gemäß Anspruch 1 oder 2, wobei das Lungenbereichsbild mehrere Schichten von zweidimensionalen Bildern beinhaltet; und das Einspeisen des Lungenbereichsbilds in jedes einer Vielzahl neuronaler Netzwerkmodelle, die durch Training auf der Basis unterschiedlicher Pneumonieanzeichen erhalten wurden, und das Segmentieren der Pneumonieanzeichen in dem Lungenbereichsbild durch jeweilige Verwendung der Vielzahl neuronaler Netzwerkmodelle, um die Vielzahl von Pneumonieanzeichenbildern zu erhalten, Folgendes beinhalten:
Einspeisen der mehreren Schichten von zweidimensionalen Bildern in jedes der Vielzahl neuronaler Netzwerkmodelle, um mehrere Schichten von zweidimensionalen Anzeichenbildern zu erhalten, die jedem der Vielzahl von Pneumonieanzeichenbildern entsprechen; und
separates Überlagern mehrerer Schichten von zweidimensionalen Anzeichenbildern, die einem gleichen Pneumonieanzeichenbild entsprechen, um die Vielzahl von Pneumonieanzeichenbildern zu erhalten.

5. Segmentierungsverfahren gemäß einem der Ansprüche 1 bis 4, wobei das Segmentierungsverfahren nach dem Erhalten der Vielzahl von Pneumonieanzeichenbildern ferner Folgendes beinhaltet:
Durchführen (113) einer Korrosions- und Ausdehnungsoperation an jedem der Vielzahl von Pneumonieanzeichenbildern.

6. Segmentierungsverfahren gemäß Anspruch 1, wobei das Segmentierungsverfahren nach dem Erhalten (420) eines Grobsegmentierungsbilds eines Lungenbereichs in dem CT-Bild ferner Folgendes beinhaltet:
Durchführen (440) einer Korrosionsoperation an dem Grobsegmentierungsbild, um ein Grobsegmentierungsbild nach Korrosion zu erhalten; und
das Ringsumausdehnen (430) zu einer Grenze des Lungenbereichs mit einer vorgegebenen Schrittlänge durch das Festlegen des Rippenbereichsbilds als die Grenze des Lungenbereichs und des Grobsegmentierungsbilds als einen Ausgangsbereich, um das Lungenbereichsbild zu erhalten, Folgendes beinhaltet:
Ringsumausdehnen (530) zu der Grenze des Lungenbereichs mit einer vorgegebenen Schrittlänge durch das Festlegen des Rippenbereichsbilds als die Grenze des Lungenbereichs und des nach der Korrosion erhaltenen Grobsegmentierungsbilds als den Ausgangsbereich, um das Lungenbereichsbild zu erhalten.

7. Segmentierungsverfahren gemäß Anspruch 1, wobei der Schritt des Ringsumausdehnens (430) zu einer Grenze des Lungenbereichs mit einer vorgegebenen Schrittlänge durch das Festlegen des Rippenbereichsbilds als die Grenze des Lungenbereichs und des Grobsegmentierungsbilds als einen Ausgangsbereich, um das Lungenbereichsbild zu erhalten, auf der Basis eines aktiven Konturmodells durchgeführt wird.

8. Segmentierungsverfahren gemäß Anspruch 6, wobei der Schritt des Ringsumausdehnens (530) zu der Grenze des Lungenbereichs mit einer vorgegebenen Schrittlänge durch das Festlegen des Rippenbereichsbilds als die Grenze des Lungenbereichs und des nach der Korrosion erhaltenen Grobsegmentierungsbilds als den Ausgangsbereich, um das Lungenbereichsbild zu erhalten, auf der Basis eines aktiven Konturmodells durchgeführt wird.

9. Segmentierungsverfahren gemäß einem der Ansprüche 1 bis 8, wobei ein Verfahren zum Erhalten (410) des Rippenbereichsbilds Folgendes beinhaltet:
Erhalten (411) eines Knochenbereichsbilds in dem CT-Bild auf der Basis eines CT-Werts eines Knochens; und
Segmentieren (412), auf der Basis eines Merkmals einer Rippe, eines Rippenbereichs in dem Knochenbereichsbild, um das Rippenbereichsbild zu erhalten.

10. Segmentierungsverfahren gemäß einem der Ansprüche 1 bis 9, wobei das Segmentierungsverfahren vor dem Erhalten (420) eines Grobsegmentierungsbilds eines Lungenbereichs in dem CT-Bild ferner Folgendes beinhaltet:
Durchführen (450) einer Vorverarbeitung an dem CT-Bild, wobei die Vorverarbeitung eine oder eine Kombination mehrerer der folgenden Operationen beinhaltet:
Hintergrundentfernung, Eliminierung weißen Rauschens, Bildbeschneidung und Ändern der Fensterbreite und Fensterlage.

11. Segmentierungsverfahren gemäß einem der Ansprüche 1 bis 10, das ferner Folgendes beinhaltet:
Durchführen (460) einer Glättungsverarbeitung an einer Grenze des Lungenbereichsbilds.

12. Eine Segmentierungsvorrichtung (90) für ein Pneumonieanzeichen, die Folgendes beinhaltet:
ein Erzeugungsmodul (91), das konfiguriert ist, um eine Vielzahl von Pneumonieanzeichenbildern auf der Basis des Lungenbereichsbilds in dem CT-Bild separat zu erzeugen; wobei das Erzeugungsmodul (91) ferner für Folgendes konfiguriert ist:
Einspeisen des Lungenbereichsbilds in jedes einer Vielzahl neuronaler Netzwerkmodelle, die durch Training auf der Basis unterschiedlicher Pneumonieanzeichen erhalten wurden, und Segmentieren der Pneumonieanzeichen in dem Lungenbereichsbild durch jeweilige Verwendung der Vielzahl neuronaler Netzwerkmodelle, um die Vielzahl von Pneumonieanzeichenbildern zu erhalten,
**gekennzeichnet durch**:
ein Kombiniermodul (92), das konfiguriert ist, um die Vielzahl von Pneumonieanzeichenbildern zu kombinieren, um ein Pneumoniegesamtanzeichenbild zu erhalten;
ein Erhaltungsmodul (93), das konfiguriert ist, um ein Rippenbereichsbild in einem CT-Bild zu erhalten;
ein Grobsegmentierungsmodul (94), das konfiguriert ist, um ein Grobsegmentierungsbild eines Lungenbereichs in dem CT-Bild zu erhalten; und
ein Feinsegmentierungsmodul (95), das konfiguriert ist, um mit einer vorgegebenen Schrittlänge zu einer Grenze des Lungenbereichs durch das Festlegen des Rippenbereichsbilds als die Grenze des Lungenbereichs und des Grobsegmentierungsbilds als einen Ausgangsbereich, um ein Lungenbereichsbild zu erhalten, ringsum auszudehnen.

13. Ein computerlesbares Speichermedium, **dadurch gekennzeichnet, dass**, wobei das Speichermedium ein Computerprogramm speichert und das Computerprogramm verwendet wird, um das Segmentierungsverfahren für ein Pneumonieanzeichen gemäß einem der Ansprüche 1 bis 11 zu implementieren.

14. Ein elektronisches Gerät (10), **dadurch gekennzeichnet, dass** es Folgendes beinhaltet:
einen Prozessor (11); und
einen Speicher (12), der konfiguriert ist, um eine durch den Prozessor (11) ausführbare Anweisung zu speichern, wobei
der Prozessor (11) konfiguriert ist, um das Segmentierungsverfahren für ein Pneumonieanzeichen gemäß einem der Ansprüche 1 bis 11 zu implementieren.

## Revendications

1. Un procédé de segmentation pour un signe de pneumonie, comprenant la génération séparée (110) d'une pluralité d'images de signe de pneumonie sur la base d'une image de région pulmonaire dans une image CT, dans lequel la génération séparée (110) d'une pluralité d'images de signe de pneumonie comprend :
l'introduction de l'image de région pulmonaire dans chaque modèle d'une pluralité de modèles de réseau neuronal obtenus grâce à la formation sur la base de différents signes de pneumonie, et la segmentation des signes de pneumonie dans l'image de région pulmonaire par l'utilisation de la pluralité de modèles de réseau neuronal respectivement, afin d'obtenir la pluralité d'images de signe de pneumonie, **caractérisé par** :
la combinaison (120) de la pluralité d'images de signe de pneumonie afin d'obtenir une image de signe complète de pneumonie, et
dans lequel un procédé pour l'obtention de l'image de région pulmonaire comprend :
l'obtention (410) d'une image de région costale dans l'image CT ;
l'obtention (420) d'une image de segmentation grossière d'une région pulmonaire dans l'image CT ; et
l'expansion (430) jusqu'à une frontière de la région pulmonaire à une longueur de pas préétablie par la prise de l'image de région costale en tant que frontière de la région pulmonaire et de l'image de segmentation grossière en tant que région initiale afin d'obtenir l'image de région pulmonaire.

2. Le procédé de segmentation selon la revendication 1, dans lequel la pluralité d'images de signe de pneumonie comprend l'une quelconque ou une combinaison de plusieurs des images de signe suivantes :
une image de consolidation de poumon, une image d'opacité en verre dépoli, une image de grosseur, une image de signe d'arbre en bourgeons, une image de nodule, une image de cavité, et une image de signe de halo.

3. Le procédé de segmentation selon la revendication 1 ou la revendication 2, dans lequel l'image de région pulmonaire comprend de multiples couches d'images bidimensionnelles ; et l'introduction de l'image de région pulmonaire dans chaque modèle d'une pluralité de modèles de réseau neuronal obtenus grâce à la formation sur la base de différents signes de pneumonie, et la segmentation des signes de pneumonie dans l'image de région pulmonaire par l'utilisation de la pluralité de modèles de réseau neuronal respectivement, afin d'obtenir la pluralité d'images de signe de pneumonie comprend :
l'introduction (111), en lots, des multiples couches d'images bidimensionnelles dans chaque modèle de la pluralité de modèles de réseau neuronal afin d'obtenir de multiples couches d'images de signe bidimensionnelles correspondant à chaque image de la pluralité d'images de signe de pneumonie ; et
la superposition séparée (112) de multiples couches d'images de signe bidimensionnelles correspondant à une même image de signe de pneumonie afin d'obtenir la pluralité d'images de signe de pneumonie.

4. Le procédé de segmentation selon la revendication 1 ou la revendication 2, dans lequel l'image de région pulmonaire comprend de multiples couches d'images bidimensionnelles ; et l'introduction de l'image de région pulmonaire dans chaque modèle d'une pluralité de modèles de réseau neuronal obtenus grâce à la formation sur la base de différents signes de pneumonie, et la segmentation des signes de pneumonie dans l'image de région pulmonaire par l'utilisation de la pluralité de modèles de réseau neuronal respectivement, afin d'obtenir la pluralité d'images de signe de pneumonie comprend :
l'introduction des multiples couches d'images bidimensionnelles dans chaque modèle de la pluralité de modèles de réseau neuronal afin d'obtenir de multiples couches d'images de signe bidimensionnelles correspondant à chaque image de la pluralité d'images de signe de pneumonie ; et
la superposition séparée de multiples couches d'images de signe bidimensionnelles correspondant à une même image de signe de pneumonie afin d'obtenir la pluralité d'images de signe de pneumonie.

5. Le procédé de segmentation selon l'une quelconque des revendications 1 à 4, le procédé de segmentation comprenant en outre, après l'obtention de la pluralité d'images de signe de pneumonie :
la réalisation (113) d'une opération de corrosion et d'expansion sur chaque image de la pluralité d'images de signe de pneumonie.

6. Le procédé de segmentation selon la revendication 1, le procédé de segmentation comprenant en outre, après l'obtention (420) d'une image de segmentation grossière d'une région pulmonaire dans l'image CT :
la réalisation (440) d'une opération de corrosion sur l'image de segmentation grossière afin d'obtenir une image de segmentation grossière après corrosion ; et
l'expansion (430) jusqu'à une frontière de la région pulmonaire à une longueur de pas préétablie par la prise de l'image de région costale en tant que frontière de la région pulmonaire et de l'image de segmentation grossière en tant que région initiale afin d'obtenir l'image de région pulmonaire comprenant :
l'expansion (530) jusqu'à la frontière de la région pulmonaire à une longueur de pas préétablie par la prise de l'image de région costale en tant que frontière de la région pulmonaire et de l'image de segmentation grossière obtenue après corrosion en tant que région initiale afin d'obtenir l'image de région pulmonaire.

7. Le procédé de segmentation selon la revendication 1, dans lequel l'étape d'expansion (430) jusqu'à une frontière de la région pulmonaire à une longueur de pas préétablie par la prise de l'image de région costale en tant que frontière de la région pulmonaire et de l'image de segmentation grossière en tant que région initiale afin d'obtenir l'image de région pulmonaire, est réalisée, sur la base d'un modèle de contour actif.

8. Le procédé de segmentation selon la revendication 6, dans lequel l'étape d'expansion (530) jusqu'à la frontière de la région pulmonaire à une longueur de pas préétablie par la prise de l'image de région costale en tant que frontière de la région pulmonaire et de l'image de segmentation grossière obtenue après corrosion en tant que région initiale afin d'obtenir l'image de région pulmonaire, est réalisée, sur la base d'un modèle de contour actif.

9. Le procédé de segmentation selon l'une quelconque des revendications 1 à 8, dans lequel un procédé pour l'obtention (410) de l'image de région costale comprend :
l'obtention (411) d'une image de région osseuse dans l'image CT sur la base d'une valeur CT d'un os ; et
la segmentation (412), sur la base d'une caractéristique d'une côte, d'une région costale dans l'image de région osseuse afin d'obtenir l'image de région costale.

10. Le procédé de segmentation selon l'une quelconque des revendications 1 à 9, le procédé de segmentation comprenant en outre, avant l'obtention (420) d'une image de segmentation grossière d'une région pulmonaire dans l'image CT :
la réalisation (450) d'un prétraitement sur l'image CT, dans lequel le prétraitement comprend l'une quelconque ou une combinaison de plusieurs des opérations suivantes : suppression de l'arrière-plan, élimination du bruit blanc, recadrage de l'image, et changement de la largeur de fenêtre et du niveau de fenêtre.

11. Le procédé de segmentation selon l'une quelconque des revendications 1 à 10, comprenant en outre :
la réalisation (460) d'un traitement de lissage sur une frontière de l'image de région pulmonaire.

12. Un appareil de segmentation (90) pour un signe de pneumonie, comprenant un module de génération (91), configuré pour générer séparément une pluralité d'images de signe de pneumonie sur la base de l'image de région pulmonaire dans l'image CT ; dans lequel le module de génération (91) est en outre configuré pour : introduire l'image de région pulmonaire dans chaque modèle d'une pluralité de modèles de réseau neuronal obtenus grâce à la formation sur la base de différents signes de pneumonie, et segmenter les signes de pneumonie dans l'image de région pulmonaire par l'utilisation de la pluralité de modèles de réseau neuronal respectivement, afin d'obtenir la pluralité d'images de signe de pneumonie, **caractérisé par** :
un module de combinaison (92), configuré pour combiner la pluralité d'images de signe de pneumonie afin d'obtenir une image de signe complète de pneumonie ;
un module d'obtention (93), configuré pour obtenir une image de région costale dans une image CT ;
un module de segmentation grossière (94), configuré pour obtenir une image de segmentation grossière d'une région pulmonaire dans l'image CT ; et
un module de segmentation fine (95), configuré pour s'étendre jusqu'à une frontière de la région pulmonaire à une longueur de pas préétablie par la prise de l'image de région costale en tant que frontière de la région pulmonaire et de l'image de segmentation grossière en tant que région initiale afin d'obtenir une image de région pulmonaire.

13. Un support de stockage lisible par ordinateur, **caractérisé en ce que**, le support de stockage stockant un programme informatique, et le programme informatique étant utilisé pour mettre en oeuvre le procédé de segmentation pour un signe de pneumonie selon l'une quelconque des revendications 1 à 11.

14. Un dispositif électronique (10), **caractérisé par le fait qu'**il comprend :
un processeur (11) ; et
une mémoire (12) configurée pour stocker une instruction exécutable par le processeur (11), dans lequel
le processeur (11) est configuré pour mettre en oeuvre le procédé de segmentation pour un signe de pneumonie selon l'une quelconque des revendications 1 à 11.
